# EUROPEAN PATENT APPLICATION

(11) **EP 4 741 208 A1**
(43) Date of publication of application: **13.05.2026**
(21) Application number: 25197819.3
(22) Date of filing: 25.08.2025
(51) Int. Cl.: B60L 3/12, G06F 18/214, G01R 31/36, B60L 53/65, G06N 20/00, G06N 3/08, B60L 53/68, G01R 31/392, B60L 58/12, B60L 58/16

(54) **BATTERY DEGRADATION LEVEL PREDICTION SYSTEM**

(30) Priority: 12.11.2024 JP 2024197395
(71) Applicant: TOYOTA JIDOSHA KABUSHIKI KAISHA, Toyota-shi, Aichi-ken 471-8571 (JP)
(72) Inventor: BUNAZAWA, Hideaki, Toyota-shi, Aichi-ken, 471-8571 (JP); INOUE, Masaaki, Toyota-shi, Aichi-ken, 471-8571 (JP); FUKUSHIMA, Shintaro, Toyota-shi, Aichi-ken, 471-8571 (JP); OKAMOTO, Masanori, Toyota-shi, Aichi-ken, 471-8571 (JP)
(74) Representative: TBK

(57) **Abstract**

A battery degradation level prediction system includes: a database configured to accumulate a degradation level of a traction secondary battery mounted on each of a plurality of vehicles; and a dataset selector configured to change, in accordance with the accumulation status of the database, a dataset to be used to train a model that predicts a future degradation level of the secondary battery of each of the vehicles.

## Description

### BACKGROUND OF THE INVENTION

### 1. Field of the Invention

The present invention relates to the technical field of battery degradation level prediction systems that predict the degradation level of a secondary battery.

### 2. Description of Related Art

As an example of this type of system, a system has been proposed that trains a predictive model for estimating an indicator related to the degradation state of a battery based on training data and estimates an indicator related to the degradation state of a battery based on the trained predictive model (see Japanese Unexamined Patent Application Publication No. 2023-51009 (JP 2023-51009 A)).

### SUMMARY OF THE INVENTION

In the technique described in JP 2023-51009 A, an indicator related to the degradation state of a battery is estimated based on the predictive model trained by machine learning. However, the estimation accuracy may decrease depending on the training data used for machine learning.

The present invention has been made in view of the above issue, and an object of the present invention is to provide a battery degradation level prediction system that can improve estimation accuracy.

A battery degradation level prediction system according to an aspect of the present invention includes: a database configured to accumulate a degradation level of a traction secondary battery mounted on each of a plurality of vehicles; and a dataset selector configured to change, in accordance with the accumulation status of the database, a dataset to be used to train a model that predicts a future degradation level of the secondary battery of each of the vehicles.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram showing the configuration of a battery degradation level prediction system according to an embodiment;
FIG. 2 is a flowchart showing the operation of the battery degradation level prediction system according to the embodiment;
FIG. 3 is a flowchart showing a method for determining data to be used for learning; and
FIG. 4 is a flowchart showing a method for constructing a model.

### DETAILED DESCRIPTION OF EMBODIMENTS

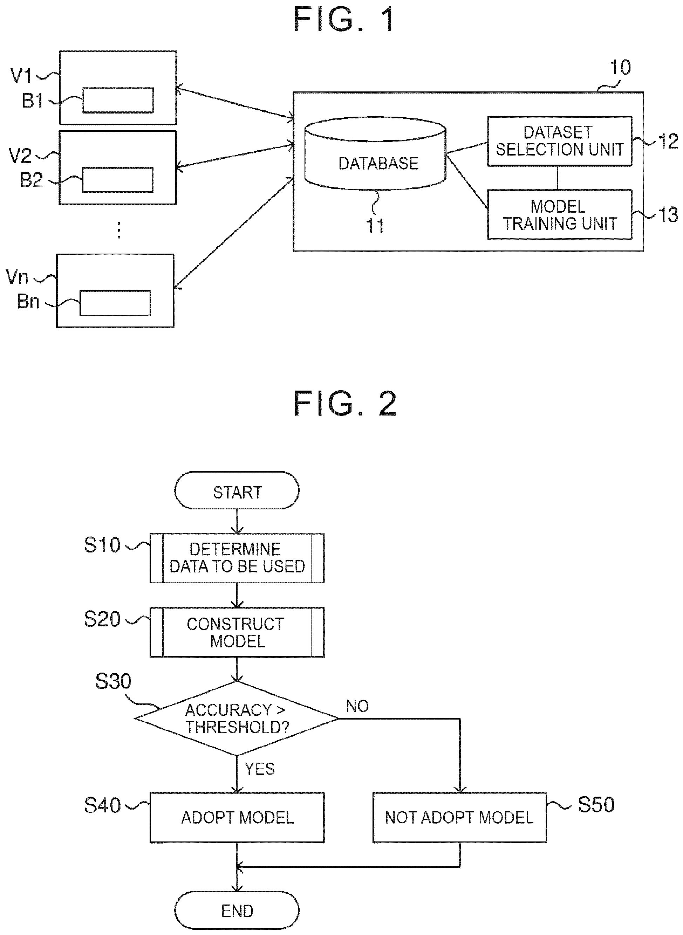

An embodiment of a battery degradation level prediction system will be described with reference to FIGS. 1 to 4. In FIG. 1, a battery degradation level prediction system 10 includes a database 11, a dataset selection unit 12, and a model training unit 13. For example, the battery degradation level prediction system 10 may be implemented by a server. The battery degradation level prediction system 10 may be implemented by a single server or may be implemented by a plurality of servers. The server may be a cloud server.

The battery degradation level prediction system 10 is configured to communicate bidirectionally with a plurality of vehicles V1, V2, ... , Vn via the Internet. The vehicles V1, V2, ... , Vn are equipped with traction secondary batteries B1, B2, ... , Bn, respectively. The vehicles V1, V2, ... , Vn may include at least one of a battery electric vehicle, a plug-in hybrid electric vehicle, a hybrid electric vehicle, and a fuel cell electric vehicle. The secondary batteries B1, B2, ... , Bn may include at least one of a lithium-ion battery, a nickel-metal hydride battery, and an all-solid-state battery.

Each of the vehicles V1, V2, ... , Vn periodically transmits data including the degradation level (state of health (SOH)) of its secondary battery to the battery degradation level prediction system 10. The data may include specification information, timestamps, characteristics related to the vehicle and the battery, and information on the degradation level. For example, the specification information includes a vehicle identification number (VIN), a battery number, a battery model, a vehicle model, a destination, and a design change version. The information on the degradation level may include the degradation level, the number of days elapsed since line-off (L/O) (that is, the date of completion of production), a distance traveled, a cumulative parking time, a state-of-charge (SOC) history and battery temperature history during ignition-on, and an SOC history and battery temperature history during ignition-off. "During ignition-on" may include at least one of the following: while the vehicle is traveling, during an electric power transfer mode, and during charging. "During ignition-off" may include either or both of the following: while the vehicle is parked and during transport. A plurality of pieces of data transmitted from the vehicles V1, V2, ... , Vn is stored in the database 11. As a result, the degradation levels of the secondary batteries B1, B2, ... , Bn are accumulated in the database 11.

The battery degradation level prediction system 10 uses the data including the degradation levels of the secondary batteries accumulated in the database 11 to train a model that predicts a future degradation level of the secondary battery. The operation of the battery degradation level prediction system 10 will be described with reference to FIGS. 2 to 4. The above model can be, for example, a multiple regression model, a multivariate machine learning model, a deep neural network (DNN), etc.

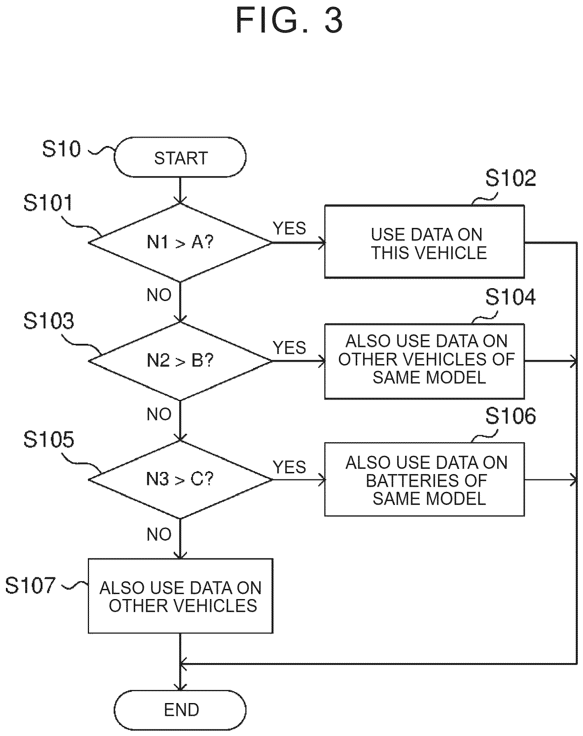

In FIG. 2, the dataset selection unit 12 of the battery degradation level prediction system 10 determines, from the data accumulated in the database 11, a dataset to be used to train a model that predicts a future degradation level of the secondary battery of one vehicle (step S10). The process in step S10 will further be described with reference to FIG. 3. In the following, this vehicle is assumed to be the vehicle V1.

The dataset selection unit 12 may set the values of thresholds A, B, and C described below based on the data on the vehicle V1 accumulated in the database 11. For example, the values of the thresholds A, B, and C may vary depending on the battery model, the vehicle model, the destination, and the design change version. For example, the dataset selection unit 12 may set the values of the thresholds A, B, and C based on a table that defines the relationship between the battery model, vehicle model, destination, and design change version and the thresholds A, B, and C. Each of the thresholds A, B, and C may be a predetermined fixed value.

In FIG. 3, the dataset selection unit 12 determines whether the number N1 of pieces of data on the vehicle V1 accumulated in the database 11 is greater than the threshold A (step S101). When it is determined in step S101 that the number N1 is greater than the threshold A (step S101: Yes), the dataset selection unit 12 determines to use the plurality of pieces of data on the vehicle V1 to train the model that predicts a future degradation level of the secondary battery B1 of the vehicle V1 (step S102). In this case, the dataset to be used for the training includes the pieces of data including the degradation level of the secondary battery B1 of the vehicle V1.

When it is determined in step S101 that the number N1 is less than or equal to the threshold A (step S101: No), the dataset selection unit 12 determines whether the total number N2 of pieces of data on the vehicle V1 and pieces of data on other vehicles of the same model as the vehicle V1 accumulated in the database 11 is greater than the threshold B (step S103). When it is determined in step S103 that the total number N2 is greater than the threshold B (step S103: Yes), the dataset selection unit 12 determines to use the data on the vehicle V1 and the data on the other vehicles of the same model as the vehicle V1 to train the model that predicts a future degradation level of the secondary battery B1 of the vehicle V1 (step S104). In this case, the dataset to be used for the training includes one or more pieces of data including the degradation level of the secondary battery B1 of the vehicle V1, and one or more pieces of data including the degradation levels of the secondary batteries of the other vehicles of the same model as the vehicle V1.

When it is determined in step S103 that the total number N2 is less than or equal to the threshold B (step S103: No), the dataset selection unit 12 determines whether the total number N3 of pieces of data on the vehicle V1 and pieces of data on other vehicles equipped with a secondary battery of the same model as the secondary battery B1 of the vehicle V1 accumulated in the database 11 is greater than the threshold C (step S105). When it is determined in step S105 that the total number N3 is greater than the threshold C (step S105: Yes), the dataset selection unit 12 determines to use the data on the vehicle V1 and the data on the other vehicles equipped with a secondary battery of the same model as the secondary battery B1 of the vehicle V1 to train the model that predicts a future degradation level of the secondary battery B1 of the vehicle V1 (step S106). In this case, the dataset to be used for the training includes one or more pieces of data including the degradation level of the secondary battery B1 of the vehicle V1, and one or more pieces of data including the degradation levels of the secondary batteries of the other vehicles equipped with a secondary battery of the same model as the secondary battery B1 of the vehicle V1.

When it is determined in step S105 that the total number N3 is less than or equal to the threshold C (step S105: No), the dataset selection unit 12 determines to use the data on the vehicle V1 and data on other vehicles accumulated in the database 11 to train the model that predicts a future degradation level of the secondary battery B1 of the vehicle V1 (step S107). In this case, the other vehicles may include a vehicle of a different model from the vehicle V1. The other vehicles may also include a vehicle equipped with a secondary battery of a different model from the secondary battery B1 of the vehicle V1. The dataset selection unit 12 may determine to use, for example, the data on the vehicle V1 and data on other vehicles with the same destination as the vehicle V1 to train the model. Alternatively, the dataset selection unit 12 may determine to use, for example, the data on the vehicle V1 and data on other vehicles with the same usage as the vehicle V1 (commercial use etc.) to train the model.

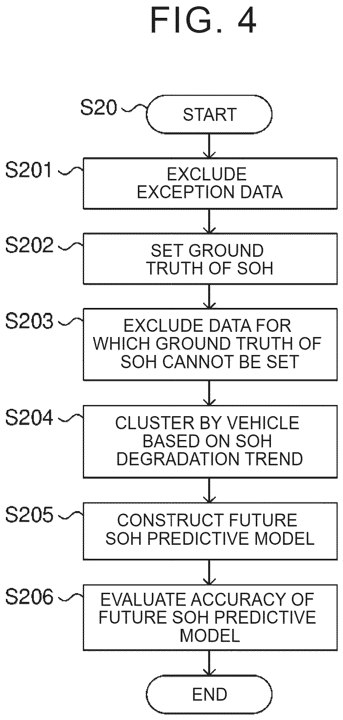

Referring back to FIG. 2, after step S10, the model training unit 13 of the battery degradation level prediction system 10 uses the dataset determined in step S10 to construct a model (e.g., the model that predicts a future degradation level of the secondary battery B1 of the vehicle V1) (step S20). The process in step S20 will further be described with reference to FIG. 4.

In FIG. 4, the model training unit 13 excludes exception data from the data included in the dataset (step S201). This configuration can improve data quality. Examples of the exception data include data on a vehicle in which a traction secondary battery has been replaced, data on a vehicle in which degradation characteristics of a traction secondary battery have changed due to software design changes, data with relatively large variation in degradation level, data on a degradation level measured with relatively low accuracy due to some kind of measurement issue. Whether the data is the exception data may be determined by, for example, rule-based determination or determination using an unsupervised learning algorithm such as the k-means method.

Next, the model training unit 13 sets the ground truth of the degradation level (step S202). Various existing methods can be used to set the ground truth of the degradation level. Therefore, details of the method for setting the ground truth of the degradation level will not be described. The model training unit 13 then excludes, from the data included in the dataset, data for which the ground truth of the degradation level cannot be set (step S203). This configuration can improve data quality.

Thereafter, the model training unit 13 clusters the data included in the dataset by vehicle, based on the degradation trend (step S204). In step S204, the model training unit 13 may sample data having properties similar to those of a prediction target (e.g., the secondary battery B1 of the vehicle V1).

The model training unit 13 then uses the dataset to construct a model that predicts a future degradation level of a secondary battery (e.g., the model that predicts a future degradation level of the secondary battery B1 of the vehicle V1) (step S205). Subsequently, the model training unit 13 evaluates the accuracy of the model constructed in step S205 (step S206). Various existing methods can be used to construct a model and to evaluate the accuracy of the constructed model. Therefore, details of the method for constructing a model and the method for evaluating the accuracy of the constructed model will not be described.

When the data included in the dataset includes data on other vehicles in addition to data on one vehicle (e.g., the vehicle V1), the influence of the data on the other vehicles on the model may be greater than the influence of the data on the one vehicle on the model. Therefore, the model training unit 13 may perform a process of weighting the data on the one vehicle more heavily than the data on the other vehicles or a process of subsampling the data included in the dataset. For example, the data weighting may be performed arbitrarily during modeling, or training may be performed such that the weights are adjusted in a machine learning or statistical model. The data subsampling may be performed in such a way that more data on other vehicles with characteristics similar to those of the one vehicle is selected, while less data on other vehicles with characteristics dissimilar to those of the one vehicle is selected. For example, the model training unit 13 may randomly perform the data subsampling such that the ratio of the data on the one vehicle (e.g., the vehicle V1) to the data on the other vehicles is a:b.

Referring back to FIG. 1, after step S20, the battery degradation level prediction system 10 determines whether the accuracy of the constructed model is greater than a predetermined threshold (step S30). When it is determined in step S30 that the accuracy of the constructed model is greater than the predetermined threshold (step S30: Yes), the battery degradation level prediction system 10 determines to adopt the constructed model (step S40). In this case, the battery degradation level prediction system 10 may use the constructed model to predict a future degradation level of the secondary battery of one vehicle (e.g., the secondary battery B1 of the vehicle V1).

When it is determined in step S30 that the accuracy of the constructed model is less than or equal to the predetermined threshold (step S30: No), the battery degradation level prediction system 10 determines not to adopt the constructed model (step S50). In this case, the battery degradation level prediction system 10 may perform the operation shown in the flowchart of FIG. 2 again.

### Technical Effects

When there are a sufficient number of pieces of data on one vehicle (i.e., data on the degradation level of the secondary battery of one vehicle), it is preferable to use the data on this vehicle to construct a model that predicts a future degradation level. This is because, when data on other vehicles is used in addition to the data on this vehicle, differences in characteristics between this vehicle and the other vehicles may affect the model. In the present embodiment, when it is determined in step S101 described above (see FIG. 3) that the number N1 is greater than the threshold A, a dataset including a plurality of pieces of data on one vehicle (e.g., the vehicle V1) is used to train the model. In this case, the model being constructed is not affected by differences in characteristics between this vehicle and other vehicles. Therefore, improvement in the accuracy of degradation level prediction can be expected.

When there are not enough number of pieces of data on one vehicle, data on other vehicles can also be used to increase the number of pieces of data available for training the model. However, as mentioned above, differences in characteristics between this vehicle and the other vehicles may affect the model. Therefore, in the present embodiment, data on other vehicles to be used is selected according to the number of pieces of data (see the flowchart in FIG. 3). This configuration can increase the number of pieces of data used to train the model while reducing degradation of the quality of the data. In this case as well, improvement in the accuracy of degradation level prediction can be expected.

Various aspects of the invention derived from the above embodiment will be described below.

A battery degradation level prediction system according to an aspect of the present invention includes: a database configured to accumulate a degradation level of a traction secondary battery mounted on each of a plurality of vehicles; and a dataset selector configured to change, in accordance with the accumulation status of the database, a dataset to be used to train a model that predicts a future degradation level of the secondary battery of each of the vehicles. In the above embodiment, the "dataset selection unit 12" is an example of the "dataset selector."

In one example of the battery degradation level prediction system, the dataset selector may be configured to select, in accordance with the accumulation status of the database, a dataset including a plurality of degradation levels of the secondary battery of one of the vehicles accumulated in the database, as the dataset to be used to train the model that predicts the future degradation level of the secondary battery of the one vehicle.

In another example of the battery degradation level prediction system, the dataset selector may be configured to select, in accordance with the accumulation status of the database, a dataset including a plurality of degradation levels of the secondary battery of one of the vehicles and the secondary battery of a vehicle of the same model as the one vehicle accumulated in the database, as the dataset to be used to train the model that predicts the future degradation level of the secondary battery of the one vehicle.

In still another example of the battery degradation level prediction system, the dataset selector may be configured to select, in accordance with the accumulation status of the database, a dataset including a plurality of degradation levels of the secondary battery of one of the vehicles and the secondary battery of the same model as the secondary battery of the one vehicle accumulated in the database, as the dataset to be used to train the model that predicts the future degradation level of the secondary battery of the one vehicle.

The present invention is not limited to the above embodiment, and can be modified as appropriate without departing from the spirit and scope of the invention that can be read from the claims and the entire specification, and battery degradation level prediction systems including such modifications are also included in the technical scope of the present invention.

## Claims

1. A battery degradation level prediction system comprising:
a database configured to accumulate a degradation level of a secondary battery for traction mounted on each of a plurality of vehicles; and
a dataset selector configured to change, in accordance with an accumulation status of the database, a dataset to be used to train a model that predicts a future degradation level of the secondary battery of each of the vehicles.

2. The battery degradation level prediction system according to claim 1, wherein the dataset selector is configured to select, in accordance with the accumulation status of the database, a dataset including a plurality of degradation levels of the secondary battery of one of the vehicles accumulated in the database, as the dataset to be used to train the model that predicts the future degradation level of the secondary battery of the one vehicle.

3. The battery degradation level prediction system according to claim 1, wherein the dataset selector is configured to select, in accordance with the accumulation status of the database, a dataset including a plurality of degradation levels of the secondary battery of one of the vehicles and the secondary battery of a vehicle of the same model as the one vehicle accumulated in the database, as the dataset to be used to train the model that predicts the future degradation level of the secondary battery of the one vehicle.

4. The battery degradation level prediction system according to claim 1, wherein the dataset selector is configured to select, in accordance with the accumulation status of the database, a dataset including a plurality of degradation levels of the secondary battery of one of the vehicles and the secondary battery of the same model as the secondary battery of the one vehicle accumulated in the database, as the dataset to be used to train the model that predicts the future degradation level of the secondary battery of the one vehicle.
